# EUROPEAN PATENT APPLICATION

(11) **EP 4 530 803 A1**
(43) Date of publication of application: **02.04.2025**
(21) Application number: 24197495.5
(22) Date of filing: 30.08.2024
(51) Int. Cl.: G06F 3/01, G06F 3/03, G06T 19/00

(54) **SELECTIVE BOUNDARIES FOR AN APPLICATION EXECUTING IN AN ARTIFICIAL REALITY ENVIRONMENT**

(30) Priority: 26.09.2023 US 202363585450 P; 21.08.2024 US 202418810209
(71) Applicant: Meta Platforms Technologies, LLC, Menlo Park, CA 94025 (US)
(72) Inventor: Mathew, Biju, Menlo Park (US); Tanner, Christopher Richard, Menlo Park (US); Xu, Jianhan, Menlo Park (US); Xu, Wenxin, Menlo Park (US); Li, Shen, Menlo Park (US); Ju, Peter, Menlo Park (US); Valori, James Alexander, Menlo Park (US); Leung, Eric, Menlo Park (US); Zhou, Lu, Menlo Park (US)
(74) Representative: Murgitroyd & Company

(57) **Abstract**

Instead of having a constant boundary, artificial reality (XR) applications that can run in boundaryless mode (e.g., in augmented or mixed reality) can be given controls by selective boundary system on an XR system to customize partial boundaries. For example, an application can specify to select particular boundaries when certain object types are in the real-world environment. In another example, an application can transition to different boundary modes when certain application events occur (e.g., when transitioning from virtual reality to mixed reality). On the backend, the selective boundary system can provide the application with an API that exposes boundary information. Based on this information, the application can use the API to create new boundaries or turn on or off certain boundaries based on requests by the application.

## Description

### TECHNICAL FIELD

The present disclosure is directed to providing selective control, of boundaries for an artificial reality (XR) environment, to XR applications.

### BACKGROUND

Artificial reality (XR) devices are becoming more prevalent. As they become more popular, the applications implemented on such devices are becoming more sophisticated. Mixed reality (MR) and augmented reality (AR) applications can provide interactive 3D experiences that combine images of the real-world with virtual objects, while virtual reality (VR) applications can provide an entirely self-contained 3D computer environment. For example, an MR or AR application can be used to superimpose virtual objects over a real scene that is observed by a camera. A real-world user in the scene can then make gestures, captured by a camera, that can provide interactivity between the real-world user and the virtual objects. AR, MR, and VR (together XR) experiences can be observed by a user through a head-mounted display (HMD), such as glasses or a headset. Some HMDs can have a pass-through display, which allows light from the real-world to pass through a lens to combine with light from a waveguide that simultaneously emits light from a projector in the HMD, allowing the HMD to present virtual objects intermixed with real objects the user can actually see.

### SUMMARY

According to a first aspect, there is provided a method for providing selective boundaries for an application executing in an artificial reality environment, the method comprising: identifying, by an artificial reality system, one or more boundaries available for the application, wherein the one or more boundaries are delineated in a real-world environment and define one or more restrictions for the artificial reality environment; exposing the one or more boundaries to the application executing in the artificial reality environment; and selectively enabling or disabling at least a portion of the one or more boundaries based, at least partially, on one or more requests received by interfacing with the application.

Interfacing with the application may include enforcing enablement of at least one mandatory boundary of the one or more boundaries.

At least some of the one or more boundaries for the application may be established in response to a command from the application indicating: A) a particular location for a new boundary and/or B) a particular object type around which the new boundary should be placed.

The method may further comprise: transitioning from a mixed reality environment to a virtual reality environment; and in response to the transitioning, enabling all of the one or more boundaries.

The method may further comprise: determining that at least one element boundary, of the one or more boundaries, corresponds to a scene element requested by the application for rendering the artificial reality environment; and disabling the at least one element boundary. The application may render the artificial reality environment relative to the scene element.

The method may further comprise determining that at least one element boundary, of the one or more boundaries, corresponds to a scene element having an object type. The selectively enabling or disabling at least the portion of the one or more boundaries may include enabling the at least one element boundary based, at least partially, on the object type.

The enabling the at least one element boundary may be further based, at least partially, on a position of the artificial reality system being within a threshold distance of the at least one element boundary.

The selectively enabling or disabling at least the portion of the one or more boundaries may include enabling at least the portion of the one or more boundaries based, at least partially, on a position of the artificial reality system being within a threshold distance of the at least the portion of the one or more boundaries.

Selectively enabling or disabling at least the portion of the one or more boundaries may be based, at least partially, on one or more events occurring in the application during execution.

The one or more restrictions may include at least one of: A) activating a warning overlaid on the artificial reality environment, B) pausing at least one of execution, updating, rendering, or any combination thereof, of the artificial reality environment, C) removing one or more virtual objects from the artificial reality environment, D) activating at least partial pass-through on the artificial reality system, E) displaying at least one of the one or more boundaries, or F) any combination thereof. The one or more restrictions may include any or each of the discussed restrictions in any possible combination and in any possible number.

According to a second aspect, there is provided a computer-readable storage medium storing instructions, for providing selective guardians for an application executing in an artificial reality environment, the instructions, when executed by a computing system, cause the computing system to carry out the method of the first aspect.

According to a third aspect, there is provided a computing system for providing selective guardians for an application executing in an artificial reality environment, the computing system comprising: one or more processors; and one or more memories storing instructions that, when executed by the one or more processors, cause the computing system to carry out the method of the first aspect.

According to a fourth aspect, there is provided a computer program product comprising instructions which, when the program is executed by a computer, cause the computer to carry out the method of the first aspect.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for providing selective boundaries for an application executing in an artificial reality (XR) environment.
Figure 6A is a conceptual diagram illustrating an example view of a real-world environment, surrounding a user of an artificial reality (XR) device executing a virtual reality (VR) experience, indicating all enabled boundaries for the XR device.
Figure 6B is a conceptual diagram illustrating an example view of a real-world environment, surrounding a user of an artificial reality (XR) device executing a mixed reality (MR) or augmented reality (AR) experience, indicating mandatory enabled boundaries for the XR device.
Figure 6C is a conceptual diagram illustrating an example view of a real-world environment, surrounding a user of an artificial reality (XR) device executing a mixed reality (MR) or augmented reality (AR) experience, indicating selectively enabled boundaries for the XR device.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to selective boundaries for an application executing in an artificial reality (XR) environment. As used herein, a "boundary" (referred to interchangeably herein as a "guardian") can be a defined XR usage space in a real-world environment. The XR usage space can have one or more of such boundaries which can trigger warnings or other system actions if a user, of an XR system, crosses the boundary when accessing an XR experience, as described further herein. In some implementations, a boundary can be established by indicating one area (e.g., a line around a set of stairs) and added / triggered when at a related area (e.g., three feet from the established line).

According to some implementations of the present technology, instead of having a constant boundary, XR applications can run in boundaryless mode (e.g., in mixed or augmented reality mode). Such applications can be given controls by a selective boundary system on an XR device to customize partial boundaries. For example, an application can specify to put up or disregard partial boundaries when certain object types are in the real-world environment (e.g., stairs, a wall, etc.). Thus, the selective boundary system can provide for customized areas of boundaries and types, including scene-based boundaries, e.g., that allow the application to disregard a boundary for a table in an MR experience that places virtual objects on the table. In another example, an application can transition to different boundary modes when certain application events occur (e.g., transition from a full boundary mode to partial boundaries when changing from virtual to mixed reality).

On the backend, the selective boundary system can provide the application with an application programming interface (API) that exposes boundary information. Based on this information, the application can activate an option for the selective boundary system to turn on and off certain boundaries based on requests by the application. However, the selective boundary system can act as the final authority of whether it is safe to turn off particular boundaries (i.e., the system can have some default mandatory boundaries), which, in some implementations, can correspond to particular scene elements and/or boundary types (e.g., mandatory boundaries corresponding to stairs).

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Implementations described herein provide specific technological improvements in the field of artificial reality. According to some implementations, an XR system can scan a real-world space to automatically identify one or more boundaries corresponding to the real-world space (e.g., walls, physical objects, etc.), with the area within the boundaries corresponding to a usable area in which an XR environment can be accessed via the XR system. The XR system can expose such boundaries to an XR application executing in the XR environment, and allow the application to request to selectively enable or disable at least a portion of the one or more boundaries. For example, to execute a VR environment, the application can request that all available boundaries be enabled, such that the user is prevented from colliding with physical objects while their view is occluded. In another example, to execute an MR or AR environment, the application can request that some or all of the boundaries be disabled as the user operates the XR system in passthrough or see-through mode and is able to visually see obstacles in the real-world environment. In some cases, the XR system can enforce one or more mandatory boundaries despite the application's requests, such as those posing risk for user injury that exceeds a threshold (e.g., downward leading stairs, dark areas where objects may not be able to be seen in passthrough, etc.). In some implementations, the XR system can interface with the application seamlessly in the background to selectively enable and disable such boundaries, without requiring user input or manual setup to select mandatory and/or optional boundaries.

Thus, implementations described herein can improve latency and the overall user experience by minimizing or eliminating manual boundary capture, setup, and/or designation, and reduce delay in rendering XR experiences. Further, by allowing for boundaries to be selectively enabled or disabled as necessary or desired, the XR system can conserve resources (e.g., processing power, battery power, etc.) that would otherwise be needed to activate and enforce all boundaries throughout execution of the XR environment. By providing boundaries for the XR environment, and, in some implementations, by enforcing mandatory boundaries (despite any requests to disable such boundaries by the application), the XR system can reduce the possibility, risk, and/or occurrence of collisions between the user of the XR system and physical objects in the real-world space and/or other accidents (e.g., falling down the stairs).

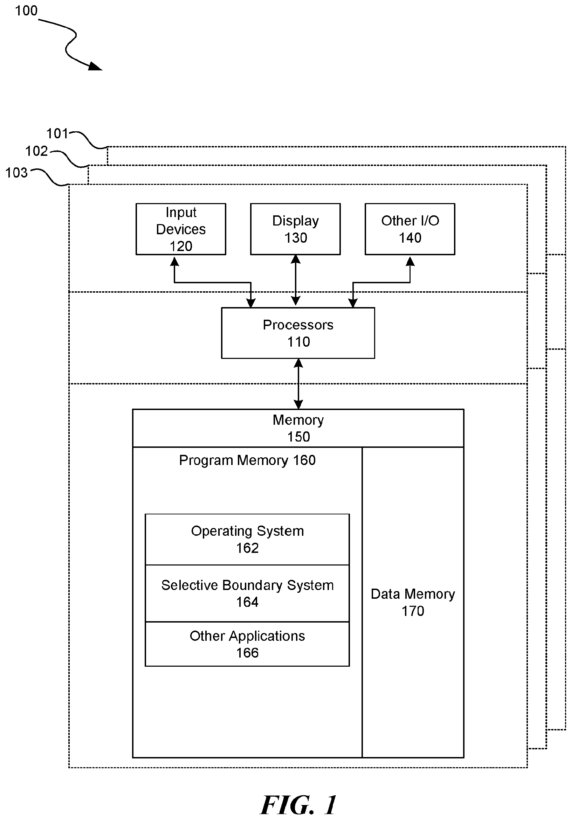

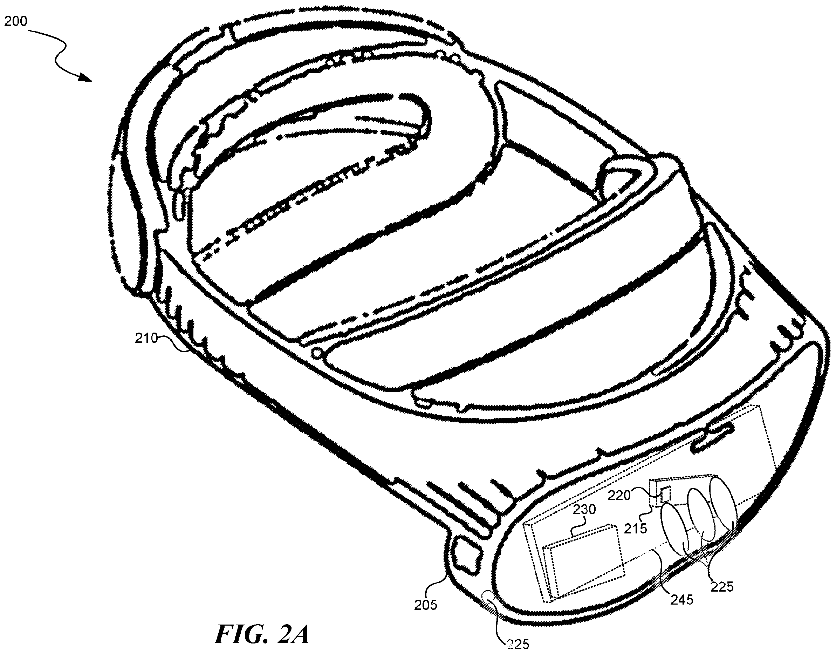

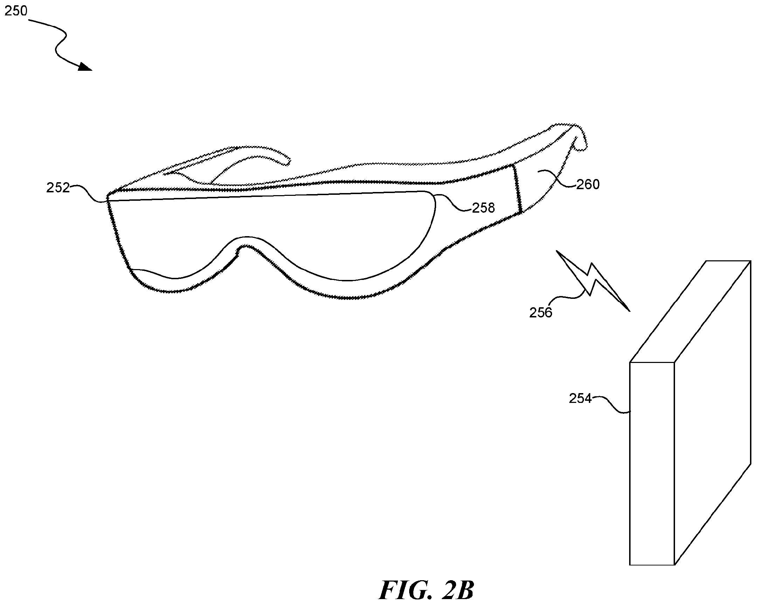

Several implementations are discussed below in more detail in reference to the figures. Figure 1 is a block diagram illustrating an overview of devices on which some implementations of the disclosed technology can operate. The devices can comprise hardware components of a computing system 100 that can provide selective guardians for an application executing in an artificial reality (XR) environment. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, selective boundary system 164, and other application programs 166. Memory 150 can also include data memory 170 that can include, e.g., guardian data, boundary data, restriction data, application data, request data, scene data, object type data, boundary type data, rendering data, configuration data, settings, user options or preferences, etc., which can be provided to the program memory 160 or any element of the computing system 100.

In various implementations, the technology described herein can include a non-transitory computer-readable storage medium storing instructions, the instructions, when executed by a computing system, cause the computing system to perform steps as shown and described herein. In various implementations, the technology described herein can include a computing system comprising one or more processors and one or more memories storing instructions that, when executed by the one or more processors, cause the computing system to steps as shown and described herein.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

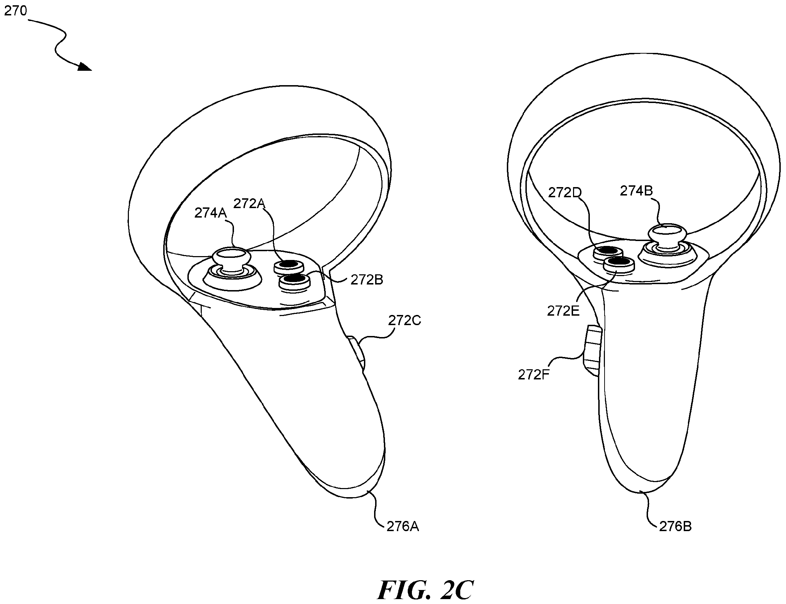

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's comea), modeling the user's eye and determining a gaze direction.

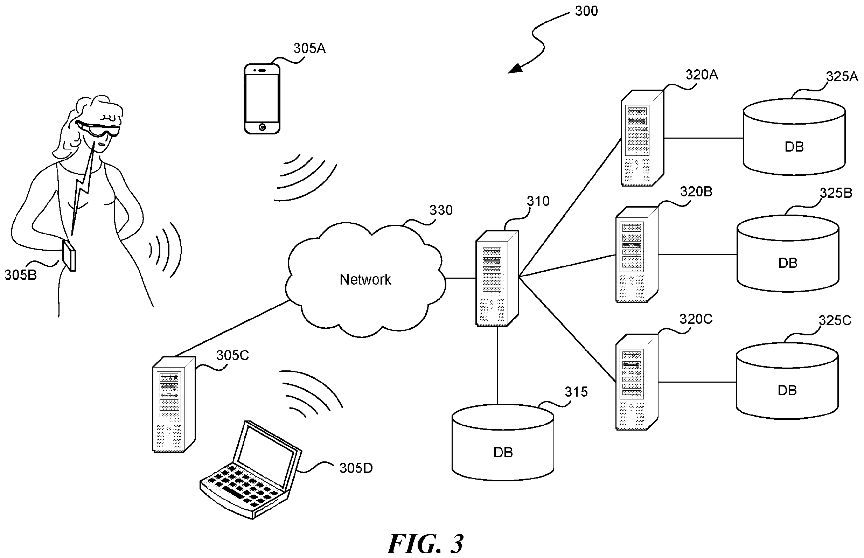

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

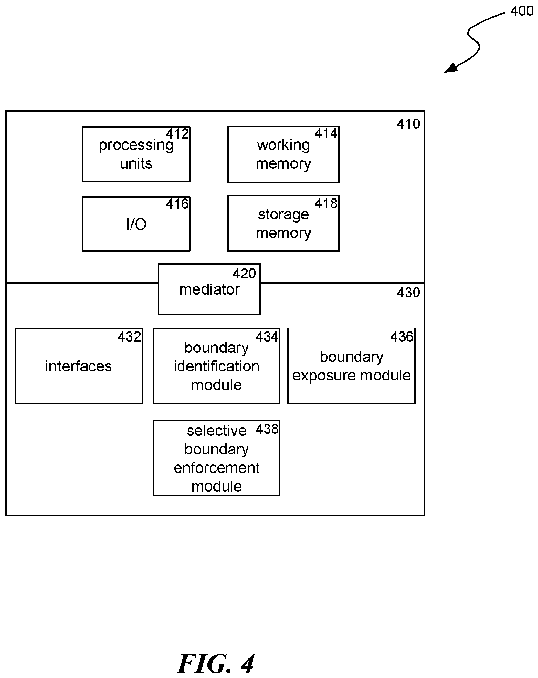

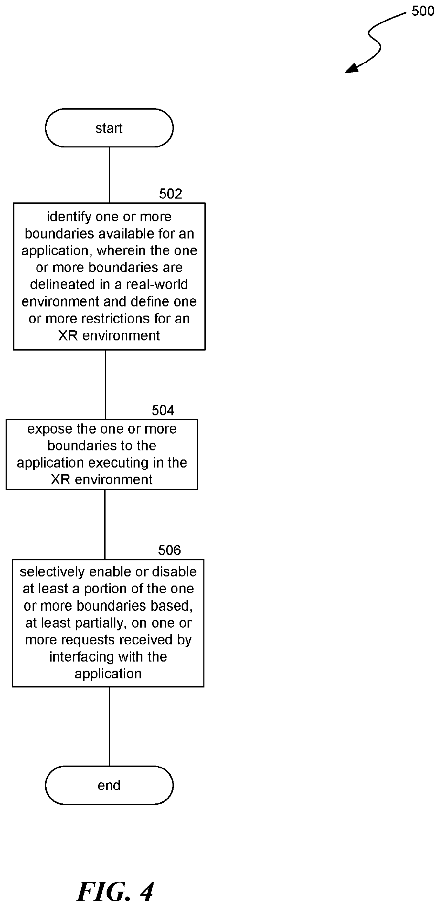

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for providing selective boundaries for an application executing in an artificial reality (XR) environment. Specialized components 430 can include boundary identification module 434, boundary exposure module 436, selective boundary enforcement module 438, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

Boundary identification module 434 can identify one or more boundaries available for an XR application. The one or more boundaries can be delineated in a real-world environment and correspond to physical objects in the real-world space that would occlude movement of a user accessing an XR environment in the real-world space. The physical objects can include any stationary or moveable objects in the real-world environment, such as walls, stairs, furniture, etc. In some implementations, boundary identification module 434 can identify the one or more boundaries by accessing pre-established and stored spatial data corresponding to the real-world space, such as when the boundaries were previously established by the user (or another user) via one or more XR systems and stored either locally or on a cloud.

In some implementations, boundary identification module 434 can establish the one or more boundaries for the real-world space by one or more methods. For example, in some implementations, boundary identification module 434 can establish the one or more boundaries by automatically generating an XR space model or a mesh corresponding to the real-world space, as described further herein. In some implementations, boundary identification module 434 can identify the one or more boundaries based on manual establishment of the boundaries by the user via an XR system, such as by outlining the usable space (e.g., open floor area surrounded by walls and excluding physical objects) in the real-world environment with a ray cast from a controller (e.g., controller 276A and/or 276B of Figure 2C).

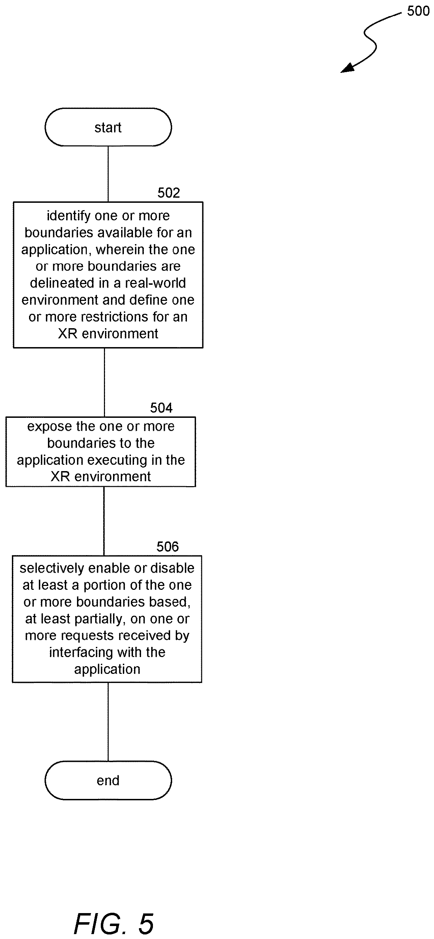

The one or more boundaries can define one or more restrictions for the XR environment. In some implementations, all of the one or more boundaries can define the same one or more restrictions, while in other implementations, some of the one or more boundaries can define different restrictions than others of the one or more boundaries. The one or more restrictions can include actions that can be taken when the XR system is within or outside of the one or more boundaries. For example, from within the one or more boundaries, the user can access and/or execute the XR environment without restriction. In another example, when approaching within a threshold distance of one or more boundaries and/or crossing one or more boundaries, the XR system can limit access to and/or the functions of the XR environment, such as by pausing rendering of the XR environment, activating passthrough on the XR system, displaying a warning on the XR system, displaying at least a portion of the one or more boundaries on the XR system, etc. Further details regarding identifying one or more boundaries available for an application are described herein with respect to block 502 of Figure 5.

Boundary exposure module 436 can expose the one or more boundaries, identified by boundary identification module 434, to the application executing in the XR environment by making the one or more boundaries available for the application to access, such as through application programming interface (API) calls. By making such API calls and accessing such boundaries, the application can perform various functions relative to the XR environment, such as by rendering virtual objects within the boundaries and/or relative to one or more boundaries. Further details regarding exposing one or more boundaries to an application executing in an XR environment are described herein with respect to block 504 of Figure 5.

Selective boundary enforcement module 438 can selectively enable or disable at least a portion of the one or more boundaries based, at least partially, on one or more requests received by interfacing with the application to which the boundaries were exposed via boundary exposure module 436. In some implementations, the application can make one or more API calls to selective boundary enforcement module 438 to request to enable or disable at least a portion of the one or more boundaries. For example, selective boundary enforcement module 438 can, based on a request from the application, disable one or more boundaries in the XR environment when the application is running in mixed reality (MR) or augmented reality (AR) mode, and in which the boundaries can be seen by the user. In another example, selective boundary enforcement module 438 can selectively disable a boundary, based on a request by the application, in order to allow the user to interact with particular physical objects. For example, the application can request to selectively disable a boundary corresponding to a physical desk in order to allow the user to interact with a virtual object (e.g., a virtual keyboard) rendered on the physical desk in MR or AR mode without restriction. In some implementations, the application can request to selectively enable or disable boundaries based on the types of scene elements corresponding to the physical objects in the real-world environment, as described further herein. In some implementations, selective boundary enforcement module 438 can enforce one or more mandatory boundaries for the XR environment regardless of any requests by the application to disable such boundaries, such as when the XR system is operating in VR mode and physical occlusions in the real-world environment cannot be seen by the user. Further details regarding selectively enabling or disabling at least a portion of one or more boundaries based, at least partially, on one or more requests received by interfacing with an application are described further herein with respect to block 506 of Figure 5.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for providing selective boundaries for an application executing in an artificial reality (XR) environment. In some implementations, process 500 can be performed as a response to an application requesting boundariescorresponding to a real-world environment. In some implementations, process 500 can be performed automatically upon launch of an application. In some implementations, at least a portion of process 500 can be performed by an XR system, which can include one or more XR devices, such as an XR HMD (e.g., XR HMD 200 of Figure 2A and/or XR HMD 252 of Figure 2B), and/or one or more other XR devices within an XR system, such as external processing components, one or more controllers (e.g., controllers 276A and/or 276B of Figure 2C). In some implementations, process 500 can be performed by selective boundary system 164 of Figure 1.

At block 502, process 500 can identify one or more boundaries available for an application. The one or more boundaries can be delineated in a real-world environment, surrounding the XR system, and can define one or more restrictions for the XR environment. In some implementations, process 500 can identify the one or more boundaries available for the application based on a type of the application (e.g., a virtual reality (VR) application or a mixed reality (MR) / augmented reality (AR) application).

In some implementations, process 500 can identify the one or more boundaries available for the application by, for example, accessing previously established and stored boundaries associated with the real-world environment in which the XR system is located. In some implementations, process 500 can establish one or more boundaries for the application "on demand" upon execution of the application. In some implementations, process 500 can establish one or more boundaries for the real-world environment by applying computer vision techniques to identify the walls, ceiling, floor, etc. in image(s) captured by the XR system. In some implementations, process 500 can further establish one or more boundaries for a real-world environment by recognizing physical objects in the real-world environment that should be included in or excluded from the boundaries (e.g., tables, chairs, etc.), such as by applying object recognition techniques, and/or by accessing previously labeled scene data associated with the physical objects. In some implementations, process 500 can establish the one or more boundaries automatically by using depth sensors and/or imaging devices to identify the maximum boundaries of the real-world environment surrounding the XR device. Further details are described in U.S. Pat. App. No. 18/771,009, filed July 12, 2024, entitled "Automatic Boundary for an Artificial Reality Environment," which is herein incorporated by reference in its entirety.

In some implementations, process 500 can determine the one or more boundaries automatically, such as by applying a machine learning model to data collected by the XR system. For example, process 500 can identify the one or more boundaries based on an XR space model generated for the real-world environment. An XR space model (referred to interchangeably herein as a "room box") can indicate where the walls, floor, and/or ceiling exist the real-world space. In some implementations, process 500 can obtain the XR space model automatically. For example, as described above, a user of an XR system can scan the real-world space using one or more cameras and/or one or more depth sensors by moving and/or looking around the real-world space with the XR system, and automatically identify one or more flat surfaces (e.g., walls, floor, ceiling) in the real-world space using such image and/or depth data. For example, process 500 can identify the flat surfaces by analyzing the image and/or depth data for large areas of the same color, of consistently increasing and/or decreasing depth relative to the XR system, and/or of particular orientations (e.g., above, below, or around the XR system), etc.

In some implementations, process 500 can identify the one or more boundaries (e.g., manually or via an XR space model), at least in part, via detected positions of one or more controllers (e.g., controller 276A and/or controller 276B of Figure 2C) and/or tracked hand or other body part positions (e.g., via one or more cameras of the XR system and/or an external device). For example, the user of the XR system can move the controllers or body parts around the real-world environment to, for example, outline the floor with a ray projected from a controller or finger. In another example, the user of the XR system can set the controller or a body part on the floor to identify them based on the position of the controller or body part (e.g., as detected by one or more cameras on the XR system, as detected via one or more sensors of an IMU, etc.). In some implementations, process 500 can automatically identify the walls, which can then be refined (if necessary) via one or more controllers or body parts, such as by clicking or pinching and dragging the wall plane toward or away from the user, or by placing the controller or hand on the wall plant. In some implementations, the user can manually adjust an established boundary for the real-world environment, such as by clicking and dragging a controller relative to the boundary and/or pinching and grabbing the boundary with a hand, as detected via hand tracking techniques on the XR system. In some implementations, the application can establish additional boundaries such as by indicating particular locations for the new boundaries, particular object types around which boundaries should be placed, particular user actions or poses which establish corresponding boundaries, etc. Further details regarding identifying and realigning an XR room, including wall planes, are described in U.S. Pat. App. No. 18/346,379, filed July 3, 2023, entitled "Artificial Reality Room Capture Realignment," which is herein incorporated by reference in its entirety.

In some implementations, process 500 can establish the guardian automatically by using depth sensors and/or imaging devices to identify the maximum boundaries of the real-world environment surrounding the XR device. Further details are described in U.S. Pat. App. No. 63/585,360, filed Sept. 26, 2023, entitled "AUTOMATIC GUARDIAN FOR AN ARTIFICIAL REALITY ENVIRONMENT," which is herein incorporated by reference in its entirety.

In some implementations, process 500 can identify the one or more boundaries automatically based on a three-dimensional (3D) mesh generated by scanning the real-world environment. The mesh can be, for example, a three-dimensional (3D) model of the boundaries of the real-world space, including one or more walls, the ceiling, the floor, one or more physical objects, and/or the like. In some implementations, process 500 can generate the mesh using one or more cameras, one or more depth sensors, or any combination thereof. In some implementations, however, it is contemplated that depth data need not be captured, and can instead be predicted from the one or more images, such as by a machine learning model. In some implementations, process 500 can further perform post-processing on the mesh to refine and/or simplify the mesh. Further details regarding generating and using XR space models and meshes are described in U.S. Pat. App. No. 18/454,349, filed August 23, 2023, entitled "Assisted Scene Capture for an Artificial Reality Environment" (Attorney Docket No. 3589-0286US01), which is herein incorporated by reference in its entirety.

At block 504, process 500 can expose the one or more boundaries to the application executing in the XR environment. For example, process 500 can make the one or more boundaries available for the application to access and use, e.g., via application programming interface (API) calls. Via the API calls, the application can perform various functions with respect to one or more boundaries, such as position virtual objects within and/or relative to one or more boundaries.

At block 506, process 500 can selectively enable or disable at least a portion of the one or more boundaries based, at least partially, on one or more requests received by interfacing with the application. For example, via API calls, the application can request to enable or disable particular boundaries based on the XR environment to be presented by the application, based on features of the real-world environment, etc. In some implementations, the application can request to disable unnecessary boundaries and/or boundaries that can affect user experience in the XR environment. For example, in some implementations, process 500 can determine that an element boundary (i.e., a boundary of the one or more boundaries) corresponding to a scene element (e.g., a labeled physical object in the real-world environment) is necessary or desired by the application for rendering the XR environment. Thus, process 500 can disable the element boundary, such that the application can render the XR environment relative to the scene element and/or allow interactions with the scene element.

In some implementations, the application can request to enable an element boundary based on a type of the scene element (e.g., enable element boundaries around specific labeled objects that are not used for rendering and/or accessing the XR environment, such as doorways). In some implementations, process 500 can selectively enable at least a portion of one or more boundaries based on a position of the XR system within a threshold distance of an element boundary. For example, process 500 can leave physical objects outside a threshold distance without boundaries, but can activate boundaries surrounding some or all physical objects within a threshold distance (e.g., 1 meter).

In some implementations, selectively enabling or disabling at least a portion of the one or more boundaries can be based, at least partially, on one or more events occurring in the application during execution. For example, in a VR mode, process 500 can enable all of the boundaries. However, based on a transition of the application from the VR mode to an MR mode, process 500 can allow the application to request to disable one or more boundaries, such as boundaries corresponding to physical objects that can be visually seen by the user in pass-through (e.g., objects within the user's field-of-view). In some implementations, selectively enabling or disabling at least a portion of a boundary can be based on an application-level event modifying rendering of the artificial reality environment, such as a virtual ball bouncing through the real-world environment in which the application can use enabled boundaries to show its interactions with physical objects and/or with the user in an otherwise blocked area.

In some implementations, process 500 can enforce at least one mandatory boundary of the one or more boundaries. In the above example, process 500 can enforce enablement of all of the boundaries while an application is executing in VR mode, as the user's entire field-of-view of the real-world environment can be occluded by the VR environment. In still another example, process 500 can enforce enablement of particular boundaries necessary for ensuring safety, such as boundaries corresponding to physical objects that can be damaged and/or cause injury if the boundary were to be crossed. In some implementations, process 500 can enforce such mandatory boundaries regardless of any requests received by the application to disable such boundaries. For example, process 500 can enforce a mandatory boundary corresponding to stairs because virtual objects rendered by the application in the XR environment may occlude the user's view of the hazard, and/or the safety of the user is of greater importance than any improved user experience provided by disabling the boundary. In some implementations, process 500 can enforce all boundaries as mandatory boundaries by default upon launch of the application, unless or until the application requests to disable one or more boundaries during execution.

As noted above, the enabled boundaries can define one or more restrictions for the XR environment. For example, by the user of the XR system coming within a threshold distance of a boundary and/or crossing a boundary with the XR device and/or one or more detected body parts, process 500 can take one or more actions. In some implementations, the actions can include activating a warning overlaid on the XR environment (e.g., "You're too close to the wall!") or an instruction to move back away from and within one or more boundaries (e.g., "Back up!"). In some implementations, the actions can include pausing at least one of execution, updating, rendering, or any combination thereof, of the XR environment. For example, if a user leaves the boundary and enters a room that is unknown to the XR system and/or application, process 500 can stop executing and/or rendering the XR environment. In some implementations, the actions can include removing one or more virtual objects from the XR environment (e.g., ceasing rendering of virtual objects outside of the boundary, either associated with the same or a different application). In some implementations, the actions can include activating at least partial pass-through on the XR device, such as when one or more boundaries approached in VR mode. In some implementations, the actions can include displaying at least one of the one or more boundaries on the XR device (e.g., the boundary being approached or all of the boundaries), such that the user can visualize where the boundary or boundaries are and move away from them.

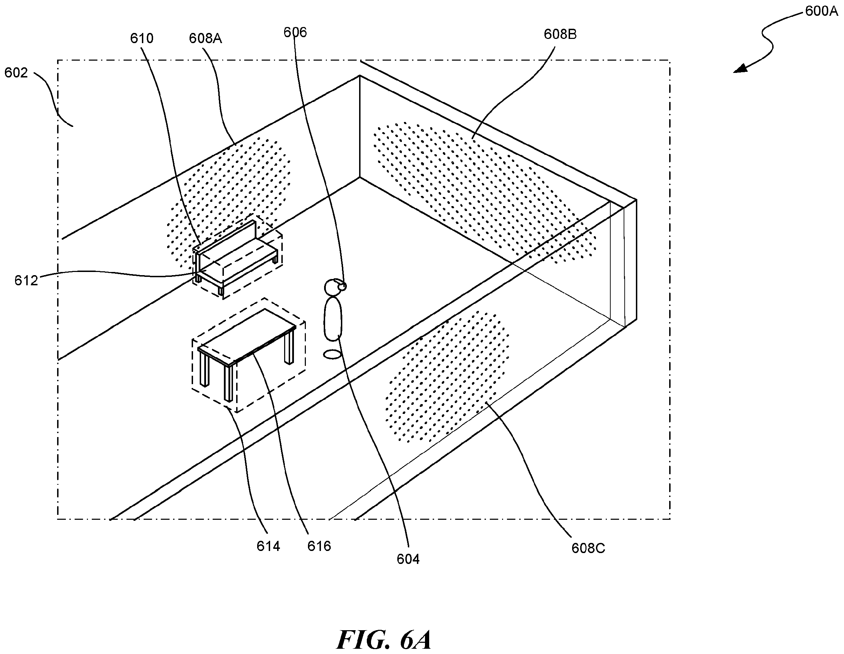

Figure 6A is a conceptual diagram illustrating an example view 600A of a real-world environment 602, surrounding a user 604 of an artificial reality (XR) system 606 executing a virtual reality (VR) experience, indicating all enabled boundaries 608A-C, 610, 614 (together forming a guardian) for the XR system 606. In some implementations, based on an application executing in VR mode, XR system 606 can enforce enablement of all of boundaries 608A-C, 610, 614. For example, boundaries 608A-C can correspond to walls in real-world environment 602, boundary 610 can correspond to couch 612 in real-world environment 602, and boundary 614 can correspond to table 616 in real-world environment 602. Thus, although user 604 of XR system 606 is fully immersed in a computer-generated view, user 604 can be prevented from colliding with the walls corresponding to boundaries 608A-C, couch 612, and table 616.

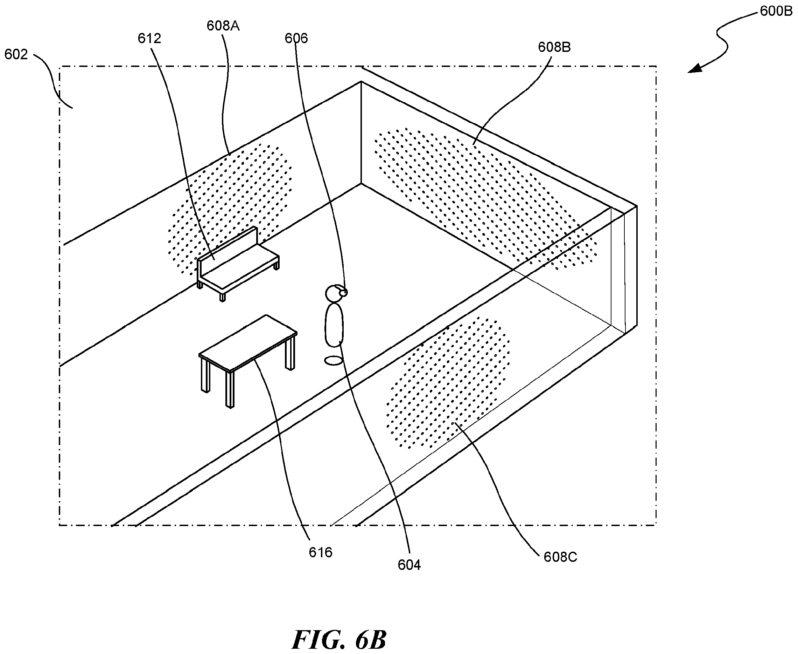

Figure 6B is a conceptual diagram illustrating an example view 600B of a real-world environment 602, surrounding a user 604 of an artificial reality (XR) system 606 executing a mixed reality (MR) or augmented reality (AR) experience, indicating mandatory enabled boundaries 608A-C (together forming a guardian) for the XR system 606. In some implementations, an application can transition from VR mode (in which boundaries 608A-C, 610, 614 of Figure 6A are all enabled), into an MR or AR mode. In transitioning, the application can request that all non-mandatory boundaries be disabled, and/or that boundaries 610, 614 specifically be disabled. In other implementations, the application can request that all non-mandatory boundaries be disabled, and/or that boundaries 610, 614 specifically be disabled without transitioning from VR to AR or MR mode (i.e., the application can begin executing in and/or only execute in AR or MR mode). In either implementation, XR system 606 can maintain enablement of mandatory boundaries 608A-C for the safety of user 604. However, boundaries 610, 614 can be disabled. Thus, in some implementations, the application can render virtual objects in the XR environment relative to couch 612 and/or table 616, and/or can allow user 604 to access and view the XR environment, without restriction, from couch 612 and/or table 616.

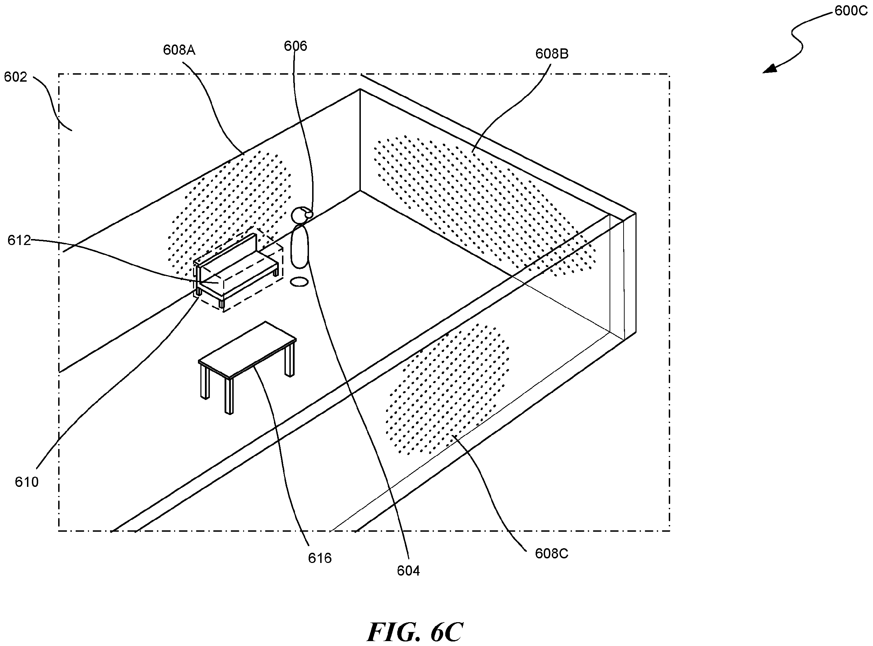

Figure 6C is a conceptual diagram illustrating an example view 600C of a real-world environment 602, surrounding a user 604 of an artificial reality (XR) system 606 executing a mixed reality (MR) or augmented reality (AR) experience, indicating selectively enabled boundaries 608A-C, 610 (together forming a guardian) for the XR system 606. In some implementations, an application executing on XR system 606 can selectively enable or disable one or more of boundaries 608A-C, 610, 614 of Figure 6A when transitioning from VR mode to MR or AR mode. In some implementations, an application can begin in MR or AR mode and, after launch, selectively enable or disable one or more of boundaries 608A-C, 610, 614 without transitioning from VR mode. In one example, boundaries 608A-C can be mandatory boundaries as shown and described with respect to Figure 6B, and only boundaries 610, 614 can be selectively enabled or disabled. In some implementations, boundaries 608A-C, 610, 614 can be selectively enabled or disabled based on a system-level or application-level event. For example, boundary 610 for couch 612 can be selectively enabled when user of XR system 606 is within a threshold distance of boundary 610 and/or couch 612. In another example, boundary 614 can be selectively disabled as requested by the application when the application wishes to render a virtual object "touching" of "interacting with" table 616 in the artificial reality environment, such as a virtual checkers board being placed on table 616 with which user 604 can interact.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for providing selective boundaries for an application executing in an artificial reality environment, the method comprising:
identifying, by an artificial reality system, one or more boundaries available for the application,
wherein the one or more boundaries are delineated in a real-world environment and define one or more restrictions for the artificial reality environment;
exposing the one or more boundaries to the application executing in the artificial reality environment; and
selectively enabling or disabling at least a portion of the one or more boundaries based, at least partially, on one or more requests received by interfacing with the application.

2. The method of claim 1, wherein interfacing with the application includes enforcing enablement of at least one mandatory boundary of the one or more boundaries.

3. The method of claim 1 or 2, wherein at least some of the one or more boundaries for the application are established in response to a command from the application indicating: A) a particular location for a new boundary and/or B) a particular object type around which the new boundary should be placed.

4. The method of any preceding claim, further comprising:
transitioning from a mixed reality environment to a virtual reality environment; and
in response to the transitioning, enabling all of the one or more boundaries.

5. The method of any preceding claim, further comprising:
determining that at least one element boundary, of the one or more boundaries, corresponds to a scene element requested by the application for rendering the artificial reality environment; and
disabling the at least one element boundary, wherein the application renders the artificial reality environment relative to the scene element.

6. The method of any preceding claim, further comprising:
determining that at least one element boundary, of the one or more boundaries, corresponds to a scene element having an object type,
wherein the selectively enabling or disabling at least the portion of the one or more boundaries includes enabling the at least one element boundary based, at least partially, on the object type.

7. The method of claim 6, wherein the enabling the at least one element boundary is further based, at least partially, on a position of the artificial reality system being within a threshold distance of the at least one element boundary.

8. The method of any preceding claim, wherein the selectively enabling or disabling at least the portion of the one or more boundaries includes enabling at least the portion of the one or more boundaries based, at least partially, on a position of the artificial reality system being within a threshold distance of the at least the portion of the one or more boundaries.

9. The method of any preceding claim, wherein selectively enabling or disabling at least the portion of the one or more boundaries is based, at least partially, on one or more events occurring in the application during execution.

10. The method of any preceding claim, wherein the one or more restrictions includes at least one of:
A) activating a warning overlaid on the artificial reality environment,
B) pausing at least one of execution, updating, rendering, or any combination thereof, of the artificial reality environment,
C) removing one or more virtual objects from the artificial reality environment,
D) activating at least partial pass-through on the artificial reality system,
E) displaying at least one of the one or more boundaries, or
F) any combination thereof.

11. A computer-readable storage medium storing instructions, for providing selective guardians for an application executing in an artificial reality environment, the instructions, when executed by a computing system, cause the computing system to carry out the method of any preceding claim.

12. A computing system for providing selective guardians for an application executing in an artificial reality environment, the computing system comprising:
one or more processors; and
one or more memories storing instructions that, when executed by the one or more processors, cause the computing system to carry out the method of any of claims 1 to 10.

13. A computer program product comprising instructions which, when the program is executed by a computer, cause the computer to carry out the method of any of claims 1 to 10.
